# EUROPÄISCHE PATENTANMELDUNG

(11) **EP 1 521 191 A1**
(43) Veröffentlichungstag der Anmeldung: **06.04.2005**
(21) Anmeldenummer: 03103640.3
(22) Anmeldetag: 01.10.2003
(51) Int. Cl.: G06F 17/60

(54) **Verfahren zur Ermittlung individuell geeigneter Kosmetika**

(71) Anmelder: Beiersdorf AG, 20245 Hamburg (DE)
(72) Erfinder: Dommick, Dominik, 22761, Hamburg (DE); Fett, Daniel, 20251, Hamburg (DE)

(57) **Zusammenfassung**

Die Erfindung betrifft ein Verfahren zur Ermittlung individuell geeigneter Kosmetika, insbesondere dekorative Kosmetik.

Das Verfahren umfasst mittels eine s serverseitig ausgeführten Simulationsprogramms , die Schritte
a.) ein Realbild gewählt aus unterschiedlichen Kopf -, Gesicht-, Körper- und/oder Körperteilmodellen, ein oder mehrere Kosmeti kprodukte und eine Farbe oder Effekt des jeweiligen Produktes gewählt werden,
b.) die Auswahl einem Simulationsprogramm als Eingabe zur Verfügung gestellt wird,
c.) das Simulationsprogramm ein Simulationsbild erzeugt und
d.) das Simulationsbild auf dem B ildschirm eines lokalen Rechners angezeigt wird, das das oder die gewählten Produkte mit der gewählten Farbe an dem gewählten Modell zeigt.

## Beschreibung

Die Erfindung betrifft ein Verfahren zur Ermittlung individuell geeigneter Kosmetika, insbesondere dekorative Kosmetik.

Neben der eher gesetzlichen Definition , der Körperpflege, Reinigung und Vers chönerung, müssen Kosmetika und insbesondere dekorative Kosmetika auch individuelle Emotionen und Persönlichkeitsprofilierun gen erzeugen, um unter anderem gesellschaftliche Erfordernisse erfüllen zu können.

Kosmetik oder kosmetische Mittel werden klassisc h in Körperpflegemittel und dekorative Kosmetik unterschieden. Zum Letzteren zählen alle kosmetischen Mittel, die dazu geeignet sind äußerlich am Menschen das Aussehen zu Beeinflussen. Dazu zählen beispielsweise Make-up, Lippenstift, Mascara, Rouge oder Nagellack.
Alle dekorativen Kosmetika enthalten einen oder mehrere mehr oder weniger großen Anteil an Farbstoffen, die das Gesicht, die Augenregion, die Lippen und die Nägel farblich verändern. Diese farbliche Veränderungen stellen der Hauptzweck dieser Prod ukte dar. Daneben üben spezielle Inhaltstoffe zusätzlich hautpflegende und hautschützende Wirkungen aus. Neben Farbveränderungen ermöglichen einige dekorative Kosmetika auch durch Glanz-, Glimmer- und/oder Schimmereffekte den optischen Eindruck zu verbesse rn.

Aufgrund der Vielzahl an angebotenen Kosmetika, deren verschiedenen Farben, Farbnuancen und spezifischen Eigenschaften, wie beispielsweise Schimmer - oder Glanzeffekte, ist es für den Anwender nicht mehr möglich, den Überblick zu behalten und die für Ihn geeigneten kosmetischen Mittel ohne Hilfe auszuwählen.

Insbesondere der Zeitgeist nach Individualität macht es für den Anwender schwierig ein oder mehrere Kosmetikartikel individuell für seine Persönlichkeit zusammenzustellen und auszuwählen. Bislang b lieb ihm keine Wahl ausser die in Frage kommenden Produkte zu kaufen und am eigenen Körper zu testen.

Nachteil ist, dass die Auswahl der in Frage kommenden Produkte durch die damit einhergehende finanzielle Belastung begrenzt wird. Des weiteren ist ein einmal aufgetragenes Kosmetikum nicht sofort und gegebenenfalls nicht ohne Spuren bzw. Hautschäden zu entfernen.

Um diesem Umstand gerecht zu werden existieren verschiedene Hi Ifsmittel, deren man sich bedienen kann, wie beispielsweise Kataloge mit Models, die entsprechende Kosmetika aufgetragen haben. Des weiteren gibt es Farbberatungen in Kosmetikstudios oder so genannte Farbkarten mit denen der Anwender zu ihm passende Farben auswählen kann.

Nachteil an den existierenden Verfahren ist, dass weder eine in dividuelle Anpassung aller möglichen Kosmetika gegeben ist, weder ein Vergleich zwischen verschiedenen Produkten noch eine Kombination verschiedener Kosmetika und deren Wirkung ermittelbar ist.

Aufgabe der vorliegenden Erfindung ist es daher ein Verfahren bereit zu stellen, das einem Anwender ermöglicht Kosmetika ohne große Hindernisse und individuell auszuwählen und deren Auswirkung sofort zu erkennen , ohne finanzielle Belastung und ohne di rekte Anwendung der Kosmetika.

Neben der Auswahl eines kosmetisch en Mittels hat der Anwender das Problem, mehrere zueinander passende Kosmetika und zugleich zu seiner Persönlichkeit passende Mittel zu ermitteln. Beispielsweise das häufig auftretende Problem zu einem bestehenden Lippenstift das entsprechende Rouge, Nagellack etc. zu finden. Dabei sind nicht nur die Farbeigenschaften zwischen den einzelnen Mitteln aufeinander anzupassen sondern insbesondere auch deren Zusammenwirken mit der Haar - und Augenfarbefarbe, Gesichtform, Teint usw. zu beachten.

Neben den Anwendern haben auch Kosmetikhersteller häufig das Problem, zu einem bestehenden oder neu entwickelten Produkt die dazu passenden Kom binationsprodukte zu entwickeln und zusammenzustellen, beispielsweise zu einem Lippenstift den dazu passenden Nagellack. Diese Komb inationsauswahl gilt es zudem unter dem Aspekt verschiedenster Haut-, Haar- und/oder Augenfarben zu realisieren.

Aufgabe der vorliegenden Erfindung ist daher auch, ein Verfahren bereit zu stellen, dass eine Ermittlung zueinander passender Kosmetikpräparat e ohne Komplikationen ermöglicht.

Aufgrund der Verbreitung von Informationen und Bilder über das Intemet ist es möglich verschiedenste Kosmetika im Internet auszuwählen und zu begutachten. Das Internet bietet eine Vielzahl an technischen Möglichkeiten de r Bilddarstellung und deren individuellen Veränderung, wie es beispielsweise aus dem Friseurbereich bekannt ist. In diesem Fall werden beispielsweise über Computeranimation auf das Bild einer Person verschiedenen Haarfrisuren eingespielt. Der Betrachter ka nn daran erkennen, ob eine bestimmte Frisur zu seiner Gefälligkeit ausfällt.
Es fehlt jedoch weiterhin eine Möglichkeit gegebene Kosmetika ohne vorherige Installation von Zusatzprogrammen auf dem eigenen Rechner auszuwählen und sofort deren Auswirkungen auf der Haut, Haaren oder Nägel n zu betrachten.
Es ist bekannt, dass über das Intemet verschiedene Methoden angeboten werden, in denen der Anwender sich die Kosmetika verschiedenster Hersteller anschauen und zusammenstellen kann. Um jedoch eine mehr oder w eniger individuelle Anpassung mehrere Kosmetika zu erreichen, wird dem Anwender nur die Möglichkeit geboten die notwendige Software aus dem Internet herunter zu laden. Diese Programme müssen dann erst auf dem Heimarbeitsplatz, dem C lient, installiert werde n, um deren Einsatz zu ermöglichen.
Nachteilig ist, dass damit Zeit und Rechnerkapazität des Anwenders verloren geht. Weiterer Nachteil ist, dass Anwender, die lediglich Netzwerke, wie beispielsweise Firmennetzen, nutzen, in denen ein Herunterladen extern er Software beispielsweise aus Sicherheitsaspekten nicht möglich ist, diese Verfahren nicht nutzen können.

Den Nachteilen des Standes der Technik abzuhelfen, war ebenso Aufgabe der vorliegenden Erfindung.

Gelöst werden die gestellten Aufgaben durch ein Verfahren entsprechend de m Hauptanspruch. In den Unteransprüchen sind bevorzugte Ausführungsformen de s Verfahrens offenbart.
Es war überraschend und für den Fachmann außerordentlich erstaunlich, dass die gestellten Aufgaben durch ein serverseitiges, vom Rechner des Betrachters, dem lokalen Rechner, unabhängiges Verfahren gelöst werden konnte. Das Verfahren lässt sich plattformunabhängig mittels der gängigen für das Internet verfügbaren Browser ausführen.

Das Verfahren umfasst die Schritte
a.) Auswahl eines Realbildes aus unterschiedlichen Kopf -, Gesicht-, Körper- und/oder Körperteilmodellen,
   ein oder mehrere Kosmetikprodukte sowie
   einer Farbe und/oder eines Effektes des jeweiligen Produktes,
b.) Bereitstellung dieser Auswahl als Eingabeobjekt in einem Simulationsprogramm,
c.) Erzeugens eines Simulationsbildes durch das Simulationsp rogramm und
d.) Anzeige des Simulationsbild es auf dem Bildschirm eines lokalen Rechners , wobei das oder die gewählten Produkte mit der gewählten Farbe oder Effekt an dem gewählten Modell gezeigt werden.

Die Realbilder von Kopf-, Gesicht-, Körper- und/oder Körperteil en stellen fotografische Wiedergaben realer Personen, Gesichter oder deren Körperteile wieder, so genannte Modelle.

Insbesondere wird das Simulationsbild durch Kombination vorgefertigter Realbilder der Modelle mit so genannten Alphamasken erzeugt. Diese Alphamasken sind im Programm vordefinierte Bereiche des Körpers, des Gesichtes oder sonstiger Körperteile. Die Alphamasken erzeugen dadurch bei Auswahl des Produk tes und dessen Farbe und/oder Effektes in dem vordefinierten Körperbereich die Farban mutung oder den Effekt des entsprechenden gewählten Produktes. Die durch die Alphamasken definierten Bereiche werden bei der Simulation entsprechend der Farbe oder des Eig enschaftsprofils des ausgewählten Produktes verändert, d.h. z.B. entsprechend gefärbt. Je nach Art des gewählten Bereiches, Augenpartie, Lider, Haare, Wangen, Lippen, Fingernägel etc., werden durch spezielle Texturfilter die natürliche Färbung des Produkte s oder Veränderungen durch das Produkt simuliert
Dabei ist es von Vorteil, dass die Anwendungsform , die Auftragsstärke, Farbwirkung der Produkte gemeinsam mit einem international führenden Make -Up-Artist entwickelt werden und entsprechend die Texturfilter in das Simulationsprogramm implementiert sind.
Somit erhält der Anwender sofort einen optimalen Eindruck vom gewählten kosmetischen Mittel.
Die Auswahl erfolgt über Eingabe, input Befehle, von jedem mit gängigen Betriebssystemen , normalen Internetzugang und gängigen Browsem ausgestatteten Computern.

Der wesentliche Vorteil ist, dass die Bildkomposition , die Bildsimulation , vollständig auf einem Webserver läuft und nicht auf dem Client des Betrachters, welcher nur durch von einem Webserver ausgesendeten B efehlsfolgen aktiviert wird.
Dies konnte wider Erwarten gegen die technische Bedenken insbesondere hinsichtlich der zu übertragenden Datenmengen ermöglicht werden.

Die erfindungsgemäße Herausforderung bestand darin eine solche Kosmetiksimulation serverse itig auszuführen. Die serverseitige Ausführung besitzt folgende Vorteile:
1. sie ermöglicht den plattformunabh ängigen Zugang, z.B. über MAC oder IBM PC
2. sie ist Betriebssystem unabhängig, es kann sowohl auf Linux, Windows in verschiedenen Versionen, MAC OS usw. laufen,
3. sie bedeutet den vollst ändigen Verzicht auf die Installation jeder Art von Software über die Standard Intemet-Programme, wie beispielsweise browser, flash plugin etc., hinaus
4. sie erm öglicht den Zugang auch in Firmennetzen usw. die keine Softwareinstallation bzw. Ausführungen von "Activ X controls" erlauben

Die für eine Kosmetikauswahl notwendigen Rechenoperationen bei Benutzung durch mehrere Anwender und das hohe Downloadvolumen grafikintensiver Anwendungen macht ein völlig neuartiges Vorgehen notwendig, so dass das erfindungsgemäße Verfahren daher auf einer Entwicklung einer serverseitigen Lösung basiert.

Damit genügend Nutzer schnell genug vom Server aus bedient werden können und das Verfahren angewandt werden kann , muss die Anwendung, die auf dem Server die Bilder erzeugt, sehr kurze Antwortzeiten erreichen. Das wird bevorzugt dadurch möglich, das die aus Performancegründen in C programmierte Anwendung die einzelnen Bilder und Masken auf binärer Ebene direkt verarbeitet und nicht auf Bibliotheken dritter Parteien zugreift. Aufgaben wie das Übereinanderlegen von Bildern werden direkt auf einfache Rechenoperationen (addition, subtraktion, multiplikation) auf Pixelebene abgebildet und ganzzahlig ausgeführt. Die nötigen grafischen Ope rationen, um verschiedene Typen von Kosmetik (Lippenstift etc.) optisch zu simulieren, w erden im Vorfeld bestimmt und sind direkt in den Programmcode des Simulationsprogramms eingeflossen.

Vorzugsweise erfolgt die Übertragung der im Schritt a.) erfolgte n Auswahl über das im Internet standardisierte TCP/IP Protokoll und/oder erfolgt codiert in Skripte zum Aufruf des Simulationsprogramms.
Das Simulationsprogramm damit als Werkzeug für das erfindungsgemäße Verfahren und ist für den IT -Fachmann anhand der gestellten Angaben nachstellbar.

Die Kosmetikprodukte, deren Farbe und Eigenschaften und/oder die Modelbilder und deren Eigenschaften sind vorteilhafterweise in elektronischen Datenbanken abgelegt.

Die Anzahl der Modelle und deren speziellen Eigenschaften, w ie beispielsweise Haarfarbe, Gesichtteint, Gesichtform, Nagellänge etc., kann individuell gewählt werden und richtet sich in erster Linie an die Aufgabenstellung bzw. das zu verwendende Kosmetikangebot. Die Anzahl der Modelle kann bevorzugt zwischen 2 und 20 liegt, bevorzugt sind 8.

Die Anzahl der auswählbaren Produkte ist ebenso variable und beträgt bevorzugt bis zu 100.000 und orientiert sich an einer oder mehrerer Produktpalleten mindestens eines Kosmetikherstellers.

Das Verfahren enthält darüber hinaus übliche, standardmäßige Programmfunktionen, wie Drucken, Versenden, Speichern etc.
Durch die serverseitige Erstellung des Simulationsbildes kann das Verfahren plattformunabhängig mit gängigen Betriebssystemen, normalem Internetzugang und gängigen Browsern sowie ohne zusätzliches Installieren von Softwarekomponenten angewendet werden. Durch die Nutzung der standardmäßig in den gängigen, aktuellen Browsem integrierte, plattformunabhängige Flashtechnologie kann die maximale Interaktivität bei gleichzeitiger Gewährleistung optimaler Ladezeiten, beispielsweise durch die Flash - Streaming Eigenschaft, erreicht werden. Auch ein Anmelden seitens des Nutzers, wie in üblichen intemet-Softwareprogrammen ist erfindungsgemäß nicht erforderlich.

Die Simulationsbilder werden alle serverseitig durch eine Softwareapplikation erzeugt, die vorgefertigte Bilder, Produktfarben und so genannte Alph amasken miteinander kombiniert und sämtliche Bilder serverseitig produziert und ausliefert (Compositing). Alphamasken bestimmen, wi e stark der Farbauftrag in bestimmten Regionen des Bildes, der Körperregion, sein soll. Dieser komplette Vorgang findet nicht auf dem Rechner des Anwenders statt.

Die serverseitige Softwareapplikation , das Simulationsprogramm, ist eine Individualentwickl ung und liefert die plattformunabhäng en Daten interpretierbar aus. In einem gängigen Browser kann der Nutzer Produkte auswählen, die dann per Skriptsprache, wie PHP, Pearl oder Java, bevorzugt PHP, den Server übergeben werden. Dort wird die Softwareanwendu ng zur Bilderzeugung mit den entsprechenden Parametern aufgerufen.

Das erzeugte Bild wird auf dem Server gecached, um beispielsweise das doppelte Erzeugen von Bildern zu vermeiden, und an den Flash -Client gesendet, der es dann auf dem Bildschirm darstellt. Vorteilhaft ist, dass komprimierte Bildformate verwendet werden, wie insbesondere JPEG-Format, um die übertragende Datenmenge gering zu halten.

Das erfindungsgemäße Verfahren ermöglicht insbesondere Internetnutzer mit einem standardmässig ausgestattete n Intemet-Browser ohne Zusatzsoftware anhand von repräsentativen Models einen fotorealistischen Eindruck davon verschaffen, wie kosmetische Produkte, insbesondere dekorative, bevorzugt Make -up Produkte, angewandt aussehen.

Alle wesentlichen Arbeitsschritte sind innerhalb eines, gemessen an der Vielfalt der vorhandenen Optionen, übersichtlichen Bildschirmausschnittes durchführbar. Die Bedienelemente sind ergonomisch und einfach angeordnet. Das zeitraubende Hintereinanderschalten mehrerer Fenster und deren Ausschnitte entfällt damit ebenso wie ein umständliches Bedienen und Auslösen der einzelnen Verfahrensschritte. Die Bedienelemente, wie Buttons, Menüs, stellen übliche entsprechende GUI -Applikationen dar.

Sehr ergonomisch und damit b evorzugt wirkt sich eine Dreiteilung des Betrachtungsbildschirms, vorteilhaft unterteilt in Produktauswahlbereich, Model, ausgewählte Produkte. Dies ermöglicht maximale Überschaubarkeit und Flexibilität. Die Aufstellung der gewählten Produkte in einer integrierten Spalte erla ubt die einfache Zusammenstellung individueller Produktreihen. Alle weiteren Funktionalitäten, Wechsel des Models, empfohlene Looks etc., lassen sich ohne Verlassen des Bildschirmausschnittes nutzen.

In Bezug auf den gewählten Gesichtstyp hebt das Verfahr en bevorzugte Farben über den Texturfilter besonders hervor bei gleichzeitig besonders differenzierter und dadurch natürlich wirkende Produktsimulation auf den Gesichtern der angebotenen Models.

Direkt an jedes ausgewählte Produkt sind entsprechende Empfe hlungen und Tipps zu dessen optimaler Anwendung angegliedert, die im Verfahren automatisch eingeblendet werden oder frei wählbar sind und damit zur individuellen Ermittlung der Kosmetikprodukte beitragen. Bei produktbedingt am Bildschirm nicht visuell nich t sofort wahrnehmbaren Farbauftrag werden Animationen verwendet um dem Anwender ein Feedback zu geben.

Um dem Nutzer die optimale farbliche Abstimmung des Nagellacks zum übrigen Make -up zu gewährleisten und die Übersichtlichkeit des Interfaces zu bewahren , ist die Hand des Models optisch in das Modelbild integriert. Dies ist erfindungsgemäß im Verfahren nach Belieben ein - und ausschaltbar.

Zusatzfunktionalitäten wie ein fliessender V orher-/Nachher- oder ohne-Vergleich, Versandund Druckfunktionen unters treichen den Vorteil des Verfahrens und haben zugleich den Zusatzeffekt somit über verbraucherorientierte Einkaufshilfen die Verkaufswahrscheinlichkeit der Produkte zu unterstützen.

Vorteilhaft ist zudem die Möglichkeit der Speicherung von kreierten Simul ationen ("Looks"), unter der sich der potentielle Kunde einen eigenen Kundenbereich einrichten kann und auf eine zuvor getätigte Auswahl zurückgreifen kann.

Das Verfahren ist leicht zu bedienen und es sind alle realistisch denkbaren Produkt - und Farbkombinationen möglich, so dass beispielsweise insgesamt über 10 Milliarden Kombinationsmöglichkeiten darstellbar sind . Beispielsweise wirkt d ie Darstellungsqualität des Make-Up Auftrags auf den Simulationsbildern, beispielsweise Frauengesichter, absolut natürlich und exakt.

Die Erfindung stellt eine technische Verfahrensweise dar, um gegebene Kosmetika individuell auszuwählen, sie untereinander zu kombinieren und sie mit den individuellen Gegebenheiten, wie Haut-, Haar- und/oder Augenfarbe sowie Teint des Anwen ders zu kombinieren um damit eine optimale und vor allem individuell unterschiedliche Kosmetika -Zusammenstellung zu ermitteln. Das erfindungsgemäße Verfahren ermöglicht einerseits dem Anwender zu einer für Ihn einzigartigen Zusammenstellung zu ihm passende r Kosmetika zu gelangen und andererseits dem Kosmetikhersteller bei der Planung und Markteinführung der Kosmetika diese zueinander passend zu entwickeln und zusammenzustellen. Des weiteren ist mit der Bereitstellung der Anwendung des Verfahrens im internet eine erstmalige Möglichkeit gegeben, die zur gestellten Problemlösung allumfassend beiträgt.

Die Erfindung, das erfindungsgemäße Verfahren, stellt eine technische Realisierung und Parameterermittlung individueller Entscheidung sprozesse dar, die die man bislang ohne den geschilderten Aufwand nicht ermitteln konnte. Die Kombination einer serverseitigen Softwareapplikation, einer anwendungsfreundlichen Bedienelementanordnung dargestellt in einem einzigen Zentralfenster ermöglicht erst eine schnelle und umfa ssende Visualisierung der ausgewählten Kosmetika in Kombination mit dem gewählten Modell.

Durch das Verfahren werden Bilder, Daten und/oder Kombinationsparameter generiert. Die ermittelten Daten, Bilder oder sonstigen Parameter können auf dem Bildschirm d argestellt, gespeichert, als Liste ausgedruckt oder anderweitig weiterverarbeitet werden. Beispielsweise können mit den zusammengestellten Parametern neue Kosmetikproduktlinien ermittelt werden, die dann als zueina nder passend vermarktet werden können ohne das zuvor aufwendiges Ausprobieren oder externe Marktforschung oder Trendabfragen nötig wären.

Das Verfahren dient dabei bzw. ermöglicht erst eine Entscheidungsfindung des Nutzers . Das Verfahren dient als technisches Hilfsmittel zur Entscheidungsfindung, im übertragenen Sinne wie ein Modell oder Puppe, an der alle Kosmetika ausprobiert werden und deren Zusammenwirken betrachte t werden kann. Nur das das erfindung sgemäße Verfahren eine materielles Vorhandensein eines Modell oder der auszuwählenden Kosmetika überflüssig und es damit Zeit und vor allem kosteneffizient macht.

Das erfindungsgemäße Verfahren richtet sich in erster Linie an den Fachmann, dem die aus den Internet bekannten Begrifflichkeiten und Bedienelemente bekannt sind.

Darstellung 1 zeigt bei spielhaft den Aufbau des Betrachtungsbildschirms (A) des Client. Der Ausschnitt zeigt eine Dreiteilung des Betrachtungsbildschirms, vorteilhaft unterteilt in Produktauswahlbereich (1) , Model (2) und ausgewählte Produkte (3) . Dies ermöglicht maximale Übersc haubarkeit und Flexibilität. Die Aufstellung der gewählten Produkte in einer integrierten Spalte (3) erlaubt die einfache Zusammenstellung individueller Produktreihen. Alle weiteren Funktionalitäten, Wechsel des Models (4) , empfohlene Looks, Hilfe (6), Vorher/Nacher- bzw. ohne- Darstellung (5) lassen sich ohne Verlassen des Bildschirmausschnittes nutzen. Die Bedienelemente (7) sind ergonomisch angeordnet.

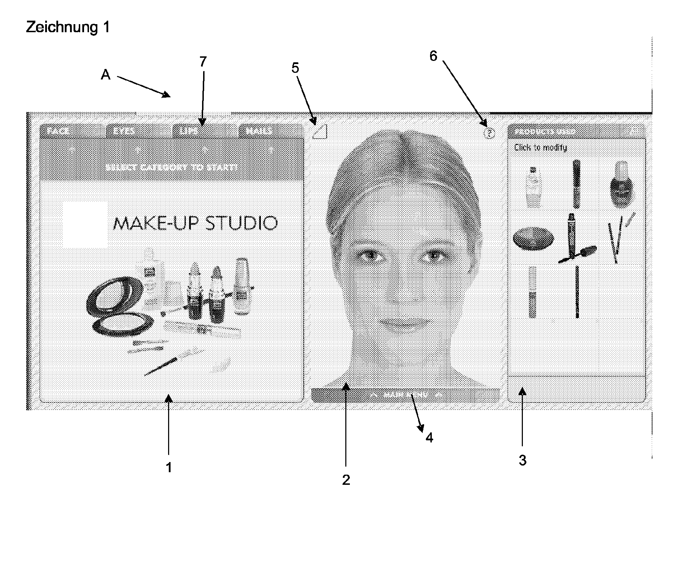

## Patentansprüche

1. Verfahren zur individuellen Ermittlung von Kosmetikprodukten mittels eines serverseitig ausgeführten Simulationsprogramms , **dadurch gekennzeichnet, dass**
a.) ein Realbild gewählt aus unterschiedlichen Kopf-, Gesicht-, Körper- und/oder Körperteilm odellen,
ein oder mehrere Kosmetikprodukte
und eine Farbe oder Effekt des jeweiligen Produktes gewählt werden,
b.) die Auswahl einem Simulationsprogramm als Eingabe zur Verfügung gestellt wird,
c.) das Simulationsprogramm ein Simulationsbild erzeugt und
d.) das Simulationsbild auf dem Bildschirm eines lokalen Rechners angezeigt wird, das das oder d ie gewählten Produkte mit der gewählten Farbe an dem gewählten Modell zeigt.

2. Verfahren nach Anspruch 1, **dadurch gekennzeichnet, dass** das Verfahren plattformunabhängig ist.

3. Verfahren nach Anspruch 1 oder 2, **dadurch gekennzeichnet, dass** das Simulationsbil d durch Kombination vorgefertigter Realbilder der Modelle mit Alphamasken erzeugt wird , wobei die Alphamasken Bereiche des Modells in der gewählten Produktfarbe oder deren Effekt darstellen und die Bereiche durch die Wahl des Produktes festgelegt werden.

4. Verfahren nach Anspruch 1 , 2 oder 3, **dadurch gekennzeichnet, dass** die Bildkomposition vollständig auf einem Server, insbesondere einem Webserver und nicht auf dem Rechner des Betrachters, dem Client, läuft und durch von einem Webserver ausgesendete Befehlsfolgen aktiviert wird.

5. Verfahren nach einem der vorstehenden Ansprüche , **dadurch gekennzeichnet, dass** die Übertragung der im Schritt a.) erfolgten Auswahl über das im Internet standardisierte TCP/IP Protokoll erfolgt und/oder codiert in Skripte zum Aufruf des Simulationsprogramms erfolgt.

6. Verfahren nach einem der vorstehenden Ansprüche , **dadurch gekennzeichnet, dass** die Kosmetikprodukte, deren Farbe , Effekte und Eigenschaften und/oder die Modelbilder und deren Eigenschaften in elektronischen Datenbanken abg elegt sind.

7. Verfahren nach einem der vorstehenden Ansprüche , **dadurch gekennzeichnet, dass** weitere übliche Programmfunktionen , insbesondere Speichern, Drucken, laden, im Verfahren integriert sind.

8. Verfahren nach einem der vorstehenden Ansprüche , **dadurch gekennzeichnet, dass** die Anwendung über einen gängigen Netzwerkanschluss, Internetzugang und Internet - Browser mit integrierter, plattformunabhängiger Flashtechnologie genutzt wird
- die Auswahl a.) sowie gegebenenfalls weitere ausgewählte Funktionen per PHP an den Internetse rver übergeben werden,
- eine Softwareanwendung, insbesondere C-Applikation, zur Bilderzeugung mit den entsprechenden Parametern aufgerufen w ird,
- ein fertige s Bild, bevorzugt im JPEG-Format, komprimiert auf dem Server gecached und an den Flash-Client gesendet wird, der es anschließend auf dem lokalen Rechnerb ildschirm darstellt, wobei
- alle wählbaren Funktionen in einem Spalten Layout in e inem Bildschirm integriert sind und
- die Bilder serverseitig erzeugt werden, indem die Softwareapplikation die Realbilder, Produktfarben und Alphamasken miteinander kombiniert , so dass
- das oder die ausgewählten Produkte am ausgewählten Modell betrachtet werden können und das oder die ausgewählten Produkte aufgelistet werden.

9. Verfahren nach einem der vorstehenden Ansprüche, **dadurch gekennzeichnet, dass** die Modellbilder Köpfe in der Vorderansicht darstellen, insbesondere weibliche Gesichter mit jeweils unterschiedlicher Haar -, Augen- und/oder Gesichtsfarbe bzw. Teint.

10. Verfahren nach Anspruch 9, dadurch geken nzeichnet, dass die Haarfarbe wählbar ist aus der Gruppe blond, rot, schwarz, braun oder Mischungen daraus .

11. Verfahren nach Anspruch 9, **dadurch gekennzeichnet, dass** das Spalten-Layout aus drei Spalten besteht und
- die erste Spalte die Auswahl der Produkte, die insbesondere nach Hauptproduktkategorien gegliedert sind, deren Farbauswahl und jeweilige Produktinformationen anzeigt und auswählbar macht,
- die zweite Spalte das Bild des Modells anzeigt und auswählbar macht, wobei das Modell wählbar mit oder ohne de s oder der ausgewählten Produkte angezeigt wird,
- die dritte Spalte die gewählten Produkte auflistet , anzeigt und eine Korrektur der Farbauswahl der jeweiligen Produkte ermöglicht.

12. Verfahren nach einem der vorstehenden Ansprüche , **dadurch gekennzeichnet, dass** die Anzahl der Modelle zwischen 2 und 20 liegt , bevorzugt 8.

13. Verfahren nach einem der vorstehenden Ansprüche , **dadurch gekennzeichnet, dass** die Anzahl der auswählbaren Produkte zwischen 2 und 100.000 liegt , bevorzugt orientiert an einer oder mehrere r Produktpalleten eines Kosmetikherstellers.

14. Verfahren nach einem der vorstehenden Ansprüche , **dadurch gekennzeichnet, dass** die Kosmetikprodukte gewählt werden aus Foundation, Concealer, Puder, Rouge, Eye Shadow, Mascara, Eyeliner, Lipliner, Lippenstift, Lip gloss und Nagellack Präparaten .

15. Verfahren nach einem der vorstehenden Ansprüche , **dadurch gekennzeichnet, dass** neben einem Kopf- oder Gesichtsmodell gleichzeitig ein Handmodell zur Anzeige von Nagelackfarben im Simulationsbild auswählbar ist.

16. Verfahren nach einem der vorstehenden Ansprüche , **dadurch gekennzeichnet, dass** bei produktbedingt am Bildschirm nicht visuell wahrnehmbaren Farbdarstellungen alternative Animationen dargestellt werden.

17. Verfahren nach einem der vorstehenden Ansprüche , dadurch gekennzei chnet, dass neben der Bildschirmanzeige ein elektronischer Versand und/oder Druck des Simulationsbildes wählbar ist.
